# EUROPÄISCHE PATENTANMELDUNG

(11) **EP 3 670 553 A1**
(43) Veröffentlichungstag der Anmeldung: **24.06.2020**
(21) Anmeldenummer: 18213761.2
(22) Anmeldetag: 18.12.2018
(51) Int. Cl.: C08F 283/01, C09J 167/02

(54) **PFROPFCOPOLYMERE UND EIN VERFAHREN ZU DEREN HERSTELLUNG**

(71) Anmelder: Evonik Operations GmbH, 45128 Essen (DE)
(72) Erfinder: ALTENBUCHNER, Peter, 48155 Münster (DE); LEIBELT, Ulrich, 47051 Duisburg (DE); HENNIG, André, 55218 Ingelheim (DE); BRAND, Thorsten, 45772 Marl (DE)
(74) Vertreter: Evonik Patent Association

(57) **Zusammenfassung**

Die vorliegende Erfindung betrifft Pfropfcopolymere A(B)x mit x = 1 bis 40, das ein Polymergerüst A und ein oder mehrere, gleiche oder verschiedene Polymerreste B aufweist, wobei die Polymerreste B gleiche oder verschiedene Reste aufweisen, die mindestens ein Element der 5. Hauptgruppe des Periodensystem der Elemente aufweisen, ein Verfahren zur Herstellung solcher Pfropfcopolymere sowie deren Verwendung.

## Beschreibung

### Gebiet der Erfindung

Die vorliegende Erfindung betrifft Pfropfcopolymere A(B)ₓ mit x = 1 bis 40, die ein Polymergerüst A und ein oder mehrere, gleiche oder verschiedene Polymerreste B aufweisen, wobei die Polymerreste B gleiche oder verschiedene Reste aufweisen, die mindestens ein Element der 5. Hauptgruppe des Periodensystem der Elemente aufweisen, ein Verfahren zur Herstellung solcher Pfropfcopolymere sowie deren Verwendung.

Pfropfcopolymere finden vielseitig Anwendung, insbesondere als oder zur Herstellung von Klebstoffen, insbesondere reaktiven Heißschmelzklebstoffen oder Heißsiegellacken, oder als Viskositätsmodifizierer bzw. Viskositätsindexmodifizierer, insbesondere in Ölen.

Die Pfropfcopolymere basieren häufig auf einem Polyestergerüst, welches unter Einbau von Itakonsäure erhalten wurde.

US 8,383,728 beschreibt z.B. Klebstoffe auf der Basis von Polyester-pfropf-Poly(meth)acrylat-Copolymeren sowie deren Herstellung, wobei das Polymergerüst unter Einbau von Itakonsäure erhalten wurde.

EP 3140360 beschreibt ein direkt haftendes, halogenfreies, schnell trocknendes Heißsiegelbindemittel zur Versiegelung von Polyesterfolien gegen Polystyrol, Polyester oder PVC, welches auf einem Pfropfcopolymeren basiert, welches auf einem Polyestergerüst aufbaut, welches unter Einpolymerisierung von Itakonsäure erhalten wurde.

EP 1 891 174 und EP 1 989 258 beschreiben Heißsiegeldispersionen, die sich aus mindestens einem Polyolefin, einem Poly(meth)acrylat, einem Polyester und einem Polyolefin-graft-Poly(meth)acrylat Copolymer zusammensetzen. Dabei enthält die Dispersion gemäß EP 1 891 258 zusätzlich ein Polyester-graft-Polymethacrylat Copolymer. Der Polyolefinanteil beträgt dabei jedoch jeweils mindestens 10 Gew% am Feststoffgehalt der Dispersionen. So ist es zwar auch möglich sowohl Aluminiumfolien, als auch PET-Folien gegenüber Polypropylen (PP) als Bechermaterial zu versiegeln, allerdings weisen die Beschichtungen nahezu keine Transparenz auf und sind aufwendig und damit teuer herzustellen. Dies steht einem breiten Einsatz entgegen.

In EP 2 495 282 ist wiederum eine Heißsiegeldispersion zum Verschließen von PET-Folien gegenüber Polystyrol-Bechern beschrieben. Diese Dispersion weist ausschließlich Polyester, Poly(meth)acrylate und Polyester-graft-Poly(meth)acrylat Copolymere auf. Jedoch hat sich gezeigt, dass diese Dispersionen eine nur verminderte Lagerstabilität aufweisen.

DE 102006009511 beschreibt die Verwendung von Zusammensetzungen, die drei unterschiedliche Polymertypen aufweisen, wobei ein Polymertyp ein Pfropfcopolymer aus einem Copolymer der Itakonsäure und Methyacrylathomo- oder copolymer ist, und deren Verwendung als Formulierungsbestandteil von Dichtmassen oder Heißsiegellacken.

### Aufgabe

Aufgabe der vorliegenden Erfindung war es, weitere Pfropfcopolymere bereitzustellen, die einfach herzustellen und deren Anwendungseigenschaften vielseitig einstellbar sind.

Weitere nicht explizit genannte Aufgaben ergeben sich aus dem Gesamtzusammenhang der nachfolgenden Beschreibung, Ansprüche und Beispiele.

### Lösung

Überraschenderweise wurde gefunden, dass die erfindungsgemäßen Pfropfcopolymere, wie in den Ansprüchen definiert, diese Aufgabe lösen.

Gegenstand der vorliegenden Erfindung sind deshalb Pfropfcopolymere, wie in den Ansprüchen definiert.

Ebenfalls Gegenstand der vorliegenden Erfindung ist auch eine Verfahren zur Herstellung von Pfropfcopolymeren, wie in den Ansprüchen definiert.

Außerdem ist Gegenstand der vorliegenden Erfindung die Verwendung der erfindungsgemäßen Pfropfcopolymere.

Die erfindungsgemäßen Pfropfcopolymere haben den Vorteil, dass sie Metallionen komplexieren und stabilisieren können. Sie können z.B. als Dispergieradditiv; amphiphile Copolymere, zur Verträglichkeitsverbesserung, als Silikon-freie Entschäumer oder als Benetzungsmittel verwendet werden.

Das erfindungsgemäße Verfahren hat den Vorteil, dass Pfropfcopolymere, die Seitenketten aufweisen, die Elemente aus der 5. Hauptgruppe des Periodensystem der Elemente aufweisen, auf einfache Weise erhalten werden können.

Bei der Verwendung von Phosphor-haltigen Monomeren zum Aufbau der Seitenketten sind auf einfache Weise Pfropfcopolymere erhältich, die gute flammhemmende Eigenschaften aufweisen.

Bei der Verwendung von Stickstoff-haltigen Monomeren zum Aufbau der Seitenketten sind auf einfache Weise Pfropfcopolymere erhältich, die gute haftvermittelnde Eigenschaften aufweisen.

Das erfindungsgemäße Pfropfcopolymer, das erfindungsgemäße Verfahren zur Herstellung eines Pfropfcopolymeren und die erfindungsgemäße Verwendung des Pfropfcopolymeren werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Das erfindungsgemäße Pfropfcopolymer A(B)ₓ, mit x = 1 bis 40, vorzugsweise 1 bis 10, das ein Polymergerüst A und ein oder mehrere, gleiche oder verschiedene Polymerreste B aufweist, zeichnet sich dadurch aus, dass die Polymerreste B der Formel (I) genügen 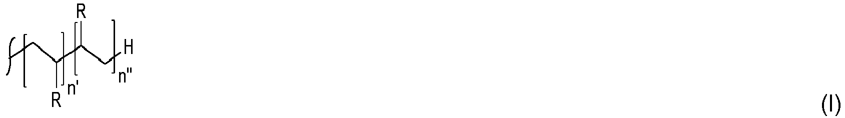 mit n' und n" = gleiche oder verschiedene Zahlen, bevorzugt Zahlen von 0 bis 40, besonders bevorzugt Zahlen von 1 bis 30, ganz besonders bevorzugt 2 bis 25, mit der Maßgabe, dass n' + n" größer-gleich 1, und R gleiche oder verschiedene Reste, die mindestens ein Element der 5. Hauptgruppe des Periodensystem der Elemente, bevorzugt mindestens ein Element ausgewählt aus Stickstoff oder Phosphor, besonders bevorzugt Phosphor aufweisen, wobei die mit n' und n" indizierten Bausteine blockweise oder statistisch verteilt angeordnet sein können, und der Polymerrest B über einen mit n' oder einen mit n" indizierten Baustein an das Polymergerüst A angebunden sein kann.

Vorzugsweise weist das erfindungsgemäße Pfropfcopolymer A(B)ₓ als Polymergerüst A einen Polyester der Formel (II) auf

X[Z]ₘ (II)

mit X = Polyester und m größer-gleich 0, bevorzugt größer-gleich 1, besonders bevorzugt größer-gleich 2, ganz besonders bevorzugt 2, und Z= OH, und/oder OR', mit R' = Kohlenwasserstoffrest mit 1 bis 8, vorzugsweise 1 bis 2 Kohlenstoffatomen, oder Carbonsäurerest mit 1 bis 8 Kohlenstoffatomen, bevorzugt OH oder OCH₃, besonders bevorzugt OH.

Der Polyester der Formel (II) weist vorzugsweise Monomereinheiten auf, die auf Itakonsäure oder Itakonsäuremethylester, vorzugsweise Itakonsäure, sowie einer oder mehreren von Itakonsäure verschiedenen aliphatischen und/oder aromatischen Carbonsäure(n) mit mindestens zwei Carbonsäuregruppen oder deren Estern, vorzugsweise den Carbonsäuren, basieren. Vorzugsweise weist der Polyester der Formel (II) als Monomereinheiten, die auf von Itakonsäure verschiedenen aliphatischen oder aromatischen Carbonsäure mit mindestens zwei Carbonsäuregruppen solche auf, die auf Bernsteinsäure, Glutarsäure, Terephthalsäure, Isophthalsäure, Adipinsäure, Azelainsäure, Sebacinsäure, Dodecandisäure, Tetradecandisäure, Octadecandisäure, Isomere der Cyclohexandicarbonsäure oder Isomere der Benzoldicarbonsäure oder Trimellitsäure oder deren veresterbare Derivate, bevorzugt auf Terephthalsäure, Isophthalsäure, Adipinsäure basieren.

Der Polyester der Formel (II) weist vorzugsweise außerdem Monomereinheiten auf, die auf einem oder mehreren aliphatischen oder aromatischen Alkoholen mit mindestens zwei Hydroxylgruppen basieren. Bevorzugte Monomereinheiten sind solche, die auf Ethylenglykol, Propandiol-1,2, Propandiol-1,3, Butandiol-1,4, Pentandiol-1,5, Hexandiol-1,6, Nonandiol-1,9, Dodecandiol-1,12, Neopentyl-glykol, Butylethylpropandiol-1,3, Methylpropandiol-1,3, Methylpentandiole, Cyclo-hexandimethanole, Trimethylolpropan, Pentaerythrol, Pentaerythrit, Dicidol, Glycerin, 2,2,4-trimethyl-1, 6-hexanediol (TMHD), Umsetzungsprodukte von Hydrochinon, Bisphenol A, Bisphenol F oder Dihydroxynaphthalin mit Epoxiden wie z. B. Ethylenoxid oder Propylenoxid, oder Etherdiole, insbesondere Oligomere bzw. Polymere, z. B. auf Basis Ethylenglykol, Propylenglykol oder Butandiol-1,4, besonders bevorzugt auf Neopentylglykol, Methlypropandiol-1,3, Cyclohexandimethanol oder Hexandiol-1,6 basieren.

Neben Monomereinheiten, die auf aliphatischen oder aromatischen Alkohole mit mindestens zwei Hydroxylgruppen und aliphatischen oder aromatischen Carbonsäuren mit mindestens zwei Carbonsäuregruppen basieren, können auch solche Monomereinheiten vorhanden sein, die auf Lactonen basieren.

Neben Monomereinheiten, die auf aliphatischen oder aromatischen Alkohole mit mindestens zwei Hydroxylgruppen und aliphatischen oder aromatischen Carbonsäuren mit mindestens zwei Carbonsäuregruppen basieren, können auch solche Monomereinheiten vorhanden sein, die auf Monocarbonsäuren oder Monoalkoholen basieren, beispielsweise Fettalkohole, Fettsäuren und/oder Benzoesäure.

Der Anteil der Monomereinheiten im Polyester der Formel (II), die auf Itakonsäure (ITA) oder deren Ester, insbesondere Itakonsäuremethylester, vorzugsweise Itakonsäure basieren, beträgt vorzugsweise von 0,1 bis 20 mol-%, bevorzugt von 1 bis 15 mol-% und besonders bevorzugt von 3 bis 12 mol- % bezogen auf die Gesamtmenge aller Monomereinheiten im Polyester der Formel (II), die auf Carbonsäuren mit mindestens zwei Carbonsäuregruppen basieren.

Das erfindungsgemäße Pfropfcopolymer A(B)ₓ weist vorzugsweise x Bausteine gemäß Formel (III) auf 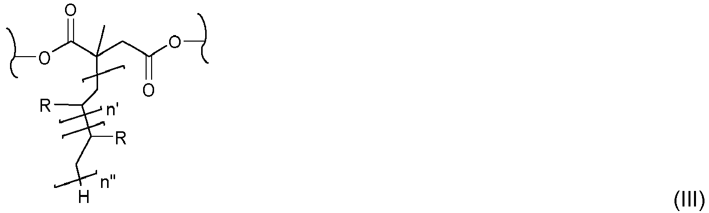 mit R, n' und n" wie für Formel (I) definiert. Diese Bausteine basieren vorzugsweise auf Itakonsäure.

Bevorzugte erfindungsgemäße Pfropfcopolymere A(B)ₓ sind solche, bei denen der R ein Rest der Formel (IVa), (IVb), (IVc), (IVd) oder (IVe) 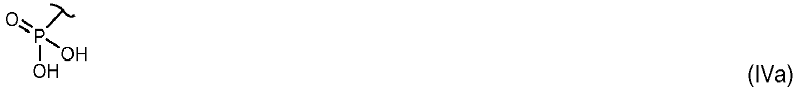 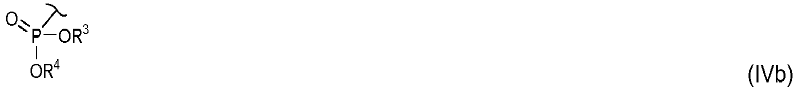 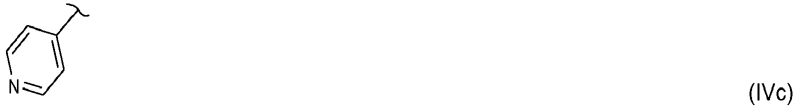 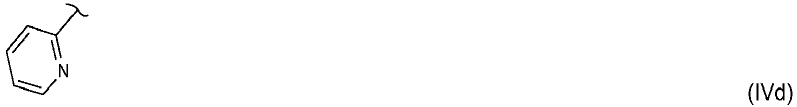 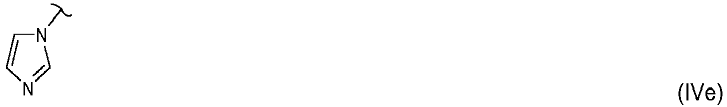 ist.

Es kann vorteilhaft sein, wenn in dem erfindungsgemäßen Pfropfcopolymer A(B)ₓ die Bausteine gemäß Formel (III) der Formel (V) genügen 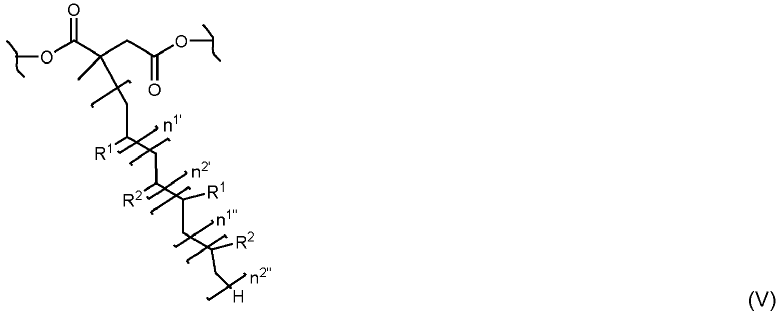 mit R¹ und R² gleich einem Rest der Formel (IVa), (IVb), (IVc), (IVd) oder (IVe) mit der Maßgabe, dass R¹ ungleich R² ist und n^{1'}, n^{1"}, n^{2'} und n^{2"} gleiche oder verschiedene Zahlen, bevorzugt Zahlen von 1 bis 5, mit der Maßgabe, dass n^{1'}+ n^{1"}= n' und n^{2'}+ n^{2"}= n" ist. Durch das Vorhandensein von unterschiedlichen Resten R¹ und R² können die Eigenschaften, wie z.B. die Verträglichkeiten mit Matrixmaterialien eingestellt werden. Auch in diesem Fall können die mit n^{1'}, n^{1"}, n^{2'} und n^{2"} indizierten Bausteine blockweise oder statistisch verteilt angeordnet sein können, und der Polymerrest kann über ein mit n^{1'}, n^{1"}, n^{2'} oder n^{2"} indizierten Baustein an das Polymergerüst angebunden sein kann.

Das erfindungsgemäße Pfropfcopolymer A(B)ₓ weist vorzugsweise ein gewichtsmittleres Molekulargewicht von 1000 bis 60000 g/mol, bevorzugt von 3000 bis 50000 g/mol und besonders bevorzugt von 4000 bis 40000 g/mol auf. Die Bestimmung des gewichtsmittleren Molekulargewichts erfolgt vorzugsweise nach der in den Beispielen angegebenen Methode.

Die erfindungsgemäßen Pfropfcopolymere A(B)ₓ können vorteilhaft erhalten werden durch das nachfolgend beschriebene, erfindungsgemäße Verfahren zur Herstellung von Pfropfcopolymeren.

Das erfindungsgemäße Verfahren zur Herstellung von Pfropfcopolymeren zeichnet sich dadurch aus, dass es die Verfahrensschritte
a) Polymerisation einer oder mehrerer aliphatischer und/oder aromatischer Carbonsäuren mit mindestens einer, bevorzugt zwei bis 10, besonders bevorzugt 2 bis 4 und ganz besonders bevorzugt zwei Carbonsäuregruppen, oder deren veresterbaren Derivaten, Itakonsäure oder deren veresterbaren Derivaten, vorzugsweise Itakonsäure, und eines oder mehrerer aliphatischer oder aromatischer Alkohole, mit mindestens zwei, bevorzugt zwei bis 10, besonders bevorzugt 2 bis 4 und ganz besonders bevorzugt zwei Hydroxylgruppen, zu einem Polyester, der mindestens eine Vinyl-Gruppe aufweist, und
b) Polymerisation des Polyester, der mindestens eine Vinyl-Gruppe aufweist, mit mindestens einem eine Vinyl-Gruppe aufweisenden Monomeren, bevorzugt mindestens einem eine Vinyl-Gruppe aufweisenden Monomeren, das ein Element der 5. Hauptgruppe des Periodensystems der Elemente, bevorzugt Stickstoff oder Phosphor, besonders bevorzugt Phosphor, aufweist, bevorzugt durchgeführt als radikalische Lösungspolymerisation,
umfasst.

Der Verfahrensschritt a) kann z.B. als Polykondensationsreaktion, bevorzugt als Schmelze-Polykondensation, in Vakuumfahrweise oder mittels Stickstoff-Strippen durchgeführt werden.

In Verfahrensschritt a) wird vorzugsweise von 0,1 bis 20 mol-%, bevorzugt von 1 bis 15 mol-% und besonders bevorzugt von 2 bis 10 mol-% bezogen auf die Gesamtmenge aller eingesetzten Carbonsäuren an Itakonsäure oder Itakonsäuremethylester, vorzugsweise Itakonsäure eingesetzt.

Die Polymerisation in Verfahrensschritt a) wird vorzugsweise so lange durchgeführt bis der erhaltene Polyester, der Vinyl-Gruppen aufweist, ein gewichtsmittleres Molekulargewicht Mw von 800 bis 25000 g/mol, bevorzugt 3000 bis 18000 g/mol aufweist. Das Molekulargewicht wird bestimmt mittels Gelpermeationschromatographie (GPC). Die Charakterisierung der Proben erfolgt in Tetrahydrofuran als Eluent nach DIN 55672-1.

In Verfahrensschritt a) werden als aliphatische oder aromatische Carbonsäure mit mindestens zwei Carbonsäuregruppen vorzugsweise Bernsteinsäure, Glutarsäure, Adipinsäure, Azelainsäure, Sebacinsäure, Dodecandisäure, Tetradecandisäure, Octadecandisäure, Isomere der Cyclohexandicarbonsäure oder Isomere der Benzoldicarbonsäure oder Trimellitsäure oder deren veresterbare Derivate eingesetzt.

Als aliphatische oder aromatische Alkohole mit mindestens zwei Hydroxylgruppen werden in Verfahrensschritt a) vorzugsweise Ethylenglykol, Propandiol-1,2, Propandiol-1,3, Butandiol-1,4, Pentandiol-1,5, Hexandiol-1,6, Nonandiol-1,9, Dodecandiol-1,12, Neopentyl-glykol, Butylethylpropandiol-1,3, Methylpropandiol-1,3, Methylpentandiole, Cyclo-hexandimethanole, Trimethylolpropan, Pentaerythrol, Pentaerythrit, Dicidol, Glycerin, 2,2,4-trimethyl-1, 6-hexanediol (TMHD) Umsetzungsprodukte von Hydrochinon, Bisphenol A, Bisphenol F oder Dihydroxynaphthalin mit Epoxiden wie z. B. Ethylenoxid oder Propylenoxid, oder Etherdiole, insbesondere Oligomere bzw. Polymere, z. B. auf Basis Ethylenglykol, Propylenglykol oder Butandiol-1,4, eingesetzt.

Neben aliphatischen oder aromatischen Alkoholen mit mindestens zwei Hydroxylgruppen und aliphatischen oder aromatischen Carbonsäuren mit mindestens zwei Carbonsäuregruppen können auch Lactone in Verfahrensschritt a) verwendet werden.

Neben Monomereinheiten, die auf aliphatischen oder aromatischen Alkoholen mit mindestens zwei Hydroxylgruppen und aliphatischen oder aromatischen Carbonsäuren mit mindestens einer, vorzugsweise zwei Carbonsäuregruppen basieren, können auch solche Monomereinheiten eingesetzt werden, die auf Monocarbonsäuren oder Monoalkoholen basieren, wie beispielsweise Fettalkohole, Fettsäuren und/oder Benzoesäure.

Der erhaltene Polyester, der Vinyl-Gruppen aufweist, kann eine lineare oder verzweigte Struktur, vorzugsweise eine lineare Struktur aufweisen. Bevorzugt weist der erhaltene Polyester, der Vinyl-Gruppen aufweist, eine OH-Zahl von 20 bis 150 mg KOH/g, vorzugsweise von 25 bis 50 mg KOH/g und eine Säurezahl von unter 10 mg KOH/g, bevorzugt unter 5 mg KOH/g und besonders bevorzugt unter 2 mg KOH/g auf. Die Hydroxylzahl (OHZ) wird bestimmt nach DIN 53240-2. Die Säurezahl wird bestimmt nach DIN EN ISO 2114.

In Verfahrensschritt b) werden als eine Vinyl-Gruppe aufweisende Monomere vorzugsweise Vinylphosphonsäure (VPA), Dimethylvinylphosphonat (DMVP), 2-Vinylpyridin, Vinylimidazol oder 4-Vinylpyridin (4VP) oder Mischungen von zwei oder mehreren dieser vinylischen Monomere eingesetzt.

Vorzugsweise wird in Verfahrensschritt b) so viel an eine Vinyl-Gruppe aufweisenden Monomeren eingesetzt, dass das molare Verhältnis von in Verfahrensschritt a) eingesetzter Itakonsäure zu in Verfahrensschritt b) eingesetzten Vinyl-Gruppe aufweisenden Monomeren von 1 zu 0,5 bis 1 zu 10, bevorzugt von 1 zu 1 bis 1 zu 8 und besonders bevorzugt von 1 zu 2 bis 1 zu 5 beträgt.

Der Verfahrensschritt b) kann z.B. so durchgeführt werden, dass eine vorzugsweise 10 bis 70 gew.-%ige, bevorzugt 40 bis 65 gew-%ige Lösung des Polyesters, der Vinyl-Gruppen aufweist, in einem geeigneten, unter Polymerisationsbedingungen inerten Lösungsmittel, das vorzugsweise einen Siedepunkt oberhalb der bei der Polymerisation verwendeten Temperatur besitzt, hergestellt wird.

Wird der Verfahrensschritt b) als Lösungspolymerisation durchgeführt, kommen als Lösungsmittel in Verfahrensschritt b) vorzugsweise Essigester, bevorzugt Ethyl-, Propyl- oder Butylacetat, aliphatische Lösungsmittel, bevorzugt Isooctan, cycloaliphatische Lösungsmittel, bevorzugt Cyclohexan, Ether oder carbonylische Lösungsmittel, bevorzugt Butanon zum Einsatz.

Zu dieser Polyester-Lösung werden das oder die Vinyl-Gruppe aufweisende(n) Monomer(e) gegeben. Vorzugsweise unter Zusatz eines oder mehrerer, bevorzugt peroxidischer RadikalInitiatoren erfolgt dann die Polymerisation, vorzugsweise bei Temperaturen von -10 °C bis 100 °C und vorzugsweise innerhalb von 4 bis 8 Stunden. Anzustreben ist vorzugsweise ein möglichst vollständiger Umsatz (der Vinyl-Gruppe aufweisende(n) Monomer(e)). Vorzugsweise finden Azoverbindungen wie z.B. AIBN oder Perester, wie z. B. tert.-Butylperoctoat als Radikalinitiatoren Verwendung. Die Initiatorkonzentration richtet sich vorzugsweise nach der Zahl der gewünschten Pfropfstellen und/oder dem gewünschten Molekulargewicht des Pfropfcopolymeren. Vorzugsweise wird eine Initiatorkonzentration von 0,01 und 20 mol-% für Schritt 1 und eine Gesamtinitiatorkonzentration von 0,01 und 20 mol-% für Schritt 2 bezogen auf die eingesetzte Monomermenge (ITA+Monomer) eingesetzt.

Die Reaktivität der Monomere Vinylphosphonsäure (VPA), 2-Vinylpyridin (2VP), 4-Vinylpyridin (4VP), Vinylimidazol und Dimethylvinylphosphonat (DMVP) unterscheidet sich stark. Daher können auch Mischungen der Monomere für das Pfropfen auf Polyestern eingesetzt werden. So können z.B. Polyester-pfropf-PVPA-co-P4VP Produkte erzeugt werden.

Die erfindungsgemäßen oder erfindungsgemäß hergestellten Polymere können als Haftvermittler, z.B. in Lacken und Beschichtungsmitteln, insbesondere für metallische Oberflächen, insbesondere als Additiv für Beschichtungsmittel, als Flammschutzmittel (Flammschutzpolyester) für die Verwendung in oder als Klebstoff, insbesondere in oder als reaktiver Heißschmelzklebstoff oder als Viskositätsmodifizierer bzw. Viskositätsindexmodifizierer, insbesondere in Ölen, wie z. B. Motorenölen, Getriebeölen oder Hydraulikölen eingesetzt werden. Die erfindungsgemäßen oder erfindungsgemäß hergestellten Polymere können insbesondere als Haftvermittler, als Flammschutzmittel in Klebstoff, bevorzugt in reaktivem Heißschmelzklebstoff, oder als Viskositätsmodifizierer oder Viskositätsindexmodifizierer, bevorzugt in Ölen, besonders bevorzugt in Motorenölen, Getriebeölen oder Hydraulikölen, verwendet werden.

### Bestimmungsmethoden:

### a) Bestimmung der Säurezahl:

Die Konzentration an Säureendgruppen wird nach DIN EN ISO 2114 titrimetrisch in mg KOH / g Polymer bestimmt.

### b) Bestimmung der OH-Zahl (OHZ):

Die Konzentration der OH-Gruppen wird nach DIN 53240-2 titrimetrisch in mg KOH / g Polymer bestimmt.

### c) Bestimmung der Glasübergangstemperatur Tg:

Die Bestimmung der thermischen Eigenschaften der im Rahmen der vorliegenden Erfindung eingesetzten Polyester erfolgt durch Dynamische Differenzkalorimetrie (DSC) in Anlehnung an die DSC-Methode DIN 53765. Es werden die Werte des zweiten Heizintervalls angegeben, die Heizrate betrug 10 K/min.

### d) Bestimmung des Molekulargewichts:

Das zahlenmittlere Molekulargewicht der erfindungsgemäßen Polyester wird nach DIN 55672-1 mittels Gelpermeationschromatographie in Tetrahydrofuran als Eluent und Polystyrol zur Kalibrierung bestimmt.

Das gewichtsmittlere Molekulargewicht wird nach DIN 55672-1 mittels Gelpermeationschromatographie in Tetrahydrofuran und 0,1% Trifluoressigsäure als Eluent und Polystyrol zur Kalibrierung bestimmt.

### e) NMR Messungen:

Der Gehalt an Itakonatwiederholungseinheiten im Copolyester(-block) vor und nach der Pfropfreaktion wurde durch ¹H-NMR-Spektroskopie (500 MHz, CDCl₃) quantifiziert. Dazu wurde die Abnahme des Integrals der Itakonsäure-Protonen-Signale (H^{A} (1H): (5,73 ppm), H^{B} (1H): (6,33 ppm)) im Verhältnis zum Integral der Adipinsäure-Protonen-Signale (H (4H) (2,33 ppm)) vor und nach der Pfropfreaktion betrachtet. Vor der Charakterisierung wurde gegebenenfalls das Lösungsmittel mittels Rotationsverdampfer entfernt.

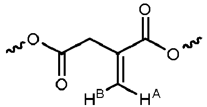

### f) Restmonomerbestimmung (REMO):

Der Restmonomergehalt der Pfropfcopolyester wurde durch HPLC mit Hilfe einer Thermo BetaMax ACID Säule mit UV-Detektion bestimmt. Als Eluent wurde ein Isokrat aus Phosphatpuffer und Methanol verwendet. Die nachfolgend aufgeführten Beispiele sollen den Gegenstand der vorliegenden Erfindung näher erläutern, ohne auf die dort beschriebenen Ausführungsformen beschränkt zu sein.

### Beispiele

**Tabelle 1: Verwendete Materialien:**

| | |
|---|---|
| Itakonsäure | Sigma-Aldrich |
| Vinylphosphonsäure | S6077714044 Merck |
| Dimethylvinylphosphonat | S7230416622 Merck |
| 4-Vinylpyridin | Sigma-Aldrich |
| Methylpropandiol-1,3 | Sigma-Aldrich |
| Cyclo-hexandimethanol-1,4 | Sigma-Aldrich |
| Hexandiol-1,6 | Sigma-Aldrich |
| Neopentyl-glykol | Sigma-Aldrich |
| Adipinsäure | Sigma-Aldrich |
| 3-Methylhydrochinon | Sigma-Aldrich |
| Phosphonsäure | Sigma-Aldrich |
| Tetrabutyl orthotitanat (TNBT) | Sigma-Aldrich |

### A) Polyestersynthese

### Polyester V4

Adipinsäure (545 g, 3,8 mol), Itakonsäure (54 g, 0,41 mol), Methylpropandiol-1,3 (358 g, 4,0 mol), Cyclo-hexandimethanol-1,4 (143 g, 1,0 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V4 sind in Tabelle 2 gezeigt.

### Polyester V5

Adipinsäure (545 g, 3,8 mol), Itakonsäure (54 g, 0,41 mol), Methylpropandiol-1,3 (358 g, 4,0 mol), Cyclo-hexandimethanol-1,4 (143 g, 1,0 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V5 sind in Tabelle 2 gezeigt.

### Polyester V6

Adipinsäure (549 g, 3,8 mol), Itakonsäure (15 g, 0,12 mol), Hexandiol-1,6 (353 g, 3,0 mol), Neopentyl-glykol (156 g, 1,5 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V6 sind in Tabelle 2 gezeigt.

### Polyester V7

Adipinsäure (527 g, 3,6 mol), Itakonsäure (35 g, 0,27 mol), Hexandiol-1,6 (354 g, 3,0 mol), Neopentyl-glykol (156 g, 1,5 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V7 sind in Tabelle 2 angegeben.

### Polyester V8

Adipinsäure (501 g, 3,4 mol), Itakonsäure (61 g, 0,47 mol), Hexandiol-1,6 (348 g, 3,0 mol), Neopentyl-glykol (153 g, 1,4 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfällt. Nach Erreichen des gewünschten Hydroxyl- und Säurezahlbereichs wurde abgestellt. Die Charakteristika von Polyester V8 sind in Tabelle 2 gezeigt.

### Polyester V9

Adipinsäure (545 g, 3,8 mol), Itakonsäure (54 g, 0,41 mol), Methylpropandiol-1,3 (346 g, 3,9 mol), Cyclo-hexandimethanol-1,4 (139 g, 1,0 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V9 sind in Tabelle 2 gezeigt.

### Polyester V10

Adipinsäure (545 g, 3,8 mol), Itakonsäure (54 g, 0,41 mol), Methylpropandiol-1,3 (346 g, 3,9 mol), Cyclo-hexandimethanol-1,4 (139 g, 1,0 mol), 0,9 g Phosphonsäure und 0,2 g 3-Methylhydrochinon wurden in einen 1 L Kolben mit Kolonne und Destillationsaufsatz im Stickstoffstrom gefüllt und erwärmt. Bei Erreichen einer Temperatur von 140 °C begann Wasser abzudestillieren. Innerhalb von zwei Stunden wurde die Temperatur auf 240 °C erhöht. Nach etwa einer weiteren Stunde bei dieser Temperatur verlangsamte sich die Wasserabspaltung. Es wurden 0,05 g TNBT und weitere 0,2 g 3-Methylhydrochinon eingerührt und im Vakuum weiter gearbeitet, welches im Verlauf der Reaktion so angepasst wurde, dass immer noch Destillat anfiel. Nach Erreichen des gewünschten Hydroxyl- und Säurezahlbereichs wurde abgestellt. Die Charakteristika von Polyester V10 sind in Tabelle 2 gezeigt.

**Tabelle 2: Charakteristika der Polyester V4 bis V10**

| Beispiel-Nr. | Polyester (Schritt A) | | | | | |
|---|---|---|---|---|---|---|
| | Mn [g/mol] | Mw [g/mol] | Tg [°C] | Tm [°C] | OHZ [mg KOH/g] | SZ [mg KOH/g] |
| V4 | 4200 | 13400 | -47 | n.f. | 42 | 0,4 |
| V5 | 4200 | 11900 | -47 | n.f. | 42 | 0,2 |
| V6 | 4000 | 10100 | -57 | 31 | 41 | 0,5 |
| V7 | 4000 | 11100 | -58 | 30 | 42 | 0,3 |
| V8 | 4200 | 12000 | -59 | 31 | 40 | 0,8 |
| V9 | 4300 | 11300 | -47 | n.f. | 40 | 0,5 |
| V10 | 4700 | 13300 | -47 | n.f. | 38 | 0,2 |

| | | | | | | |
|---|---|---|---|---|---|---|
| n.f. = nicht feststellbar | | | | | | |

### B) Pfropfcopolymerisation:

### Beispiel 1:

In einem Planflansch Reaktionsgefäß mit angeschlossener Kolonne, Ankerrührer und Innenthermometer wurden 350 g n-Butylacetat und 300 g Polyester V6 vorgelegt. Unter Rühren wurde der Polyester bei 75 °C und im Stickstoffstrom vollständig aufgelöst, 60 min gerührt und anschließend mit 0,15 g t-Butyl-per-2-ethylhexanoat versetzt. Diese Lösung wurde über einen Zeitraum von 5 min bei 75 °C gerührt, bevor mittels einer Dosierungspumpe eine Mischung aus 4,05 g Vinylphosphonsäure, 0,09 g Dimethyl 2,2'-azobis-isobutyrat und 175 g n-Butylacetat zügig innerhalb 30 min zudosiert wurde. Die Pumpe wurde mit 175g n-Butylacetat gespült und 180 min nach Dosierungsende wurde die Polymerlösung abgekühlt.

### Beispiel 2:

In einem Planflansch Reaktionsgefäß mit angeschlossener Kolonne, Ankerrührer und Innenthermometer wurden 215 g n-Butylacetat und 300 g Polyester V7 vorgelegt. Unter Rühren wurde der Polyester bei 90 °C und im Stickstoffstrom vollständig aufgelöst, 60 min gerührt und anschließend mit 0,83 g t-Butyl-per-2-ethylhexanoat versetzt. Diese Lösung wurde über einen Zeitraum von 5 min bei 90 °C gerührt, bevor mittels einer Dosierungspumpe eine Mischung aus 48,61 g Vinylphosphonsäure, 2,71 g Dimethyl 2,2'-azobis-isobutyrat und 107,5 g n-Butylacetat zügig innerhalb 75 min zudosiert wurde. Die Pumpe wurde mit 107,5 g n-Butylacetat gespült und 180 min nach Dosierungsende wurde die Polymerlösung abgekühlt.

### Beispiel 3:

In einem Planflansch Reaktionsgefäß mit angeschlossener Kolonne, Ankerrührer und Innenthermometer wurden 100 g n-Butylacetat und 300 g Polyester V6 vorgelegt. Unter Rühren wurde der Polyester bei 105 °C und im Stickstoffstrom vollständig aufgelöst, 60 min gerührt und anschließend mit 1,50 g t-Butyl-per-2-ethylhexanoat versetzt. Diese Lösung wurde über einen Zeitraum von 5 min bei 105 °C gerührt, bevor mittels einer Dosierungspumpe eine Mischung aus 4,05 g Vinylphosphonsäure, 0,71 g Dimethyl 2,2'-azobis-isobutyrat und 50 g n-Butylacetat zügig innerhalb 30 min zudosiert wurde. Die Pumpe wurde mit 50 g n-Butylacetat gespült und 180 min nach Dosierungsende wurde die Polymerlösung abgekühlt.

### Beispiel 4:

In einem Planflansch Reaktionsgefäß mit angeschlossener Kolonne, Ankerrührer und Innenthermometer wurden 275 g n-Butylacetat und 150 g Polyester V8 vorgelegt. Unter Rühren wurde der Polyester bei 75 °C und im Stickstoffstrom vollständig aufgelöst, 60 min gerührt und anschließend mit 0,75 g t-Butyl-per-2-ethylhexanoat versetzt. Diese Lösung wurde über einen Zeitraum von 5 min bei 75 °C gerührt, bevor mittels einer Dosierungspumpe eine Mischung aus 79,87 g Vinylphosphonsäure, 7,24 g Dimethyl 2,2'-azobis-isobutyrate und 137,5 g n-Butylacetat zügig innerhalb 30 min zudosiert wurde. Die Pumpe wurde mit 137,5 g n-Butylacetat gespült und 180 min nach Dosierungsende wurde die Polymerlösung abgekühlt.

### Beispiel 5:

In einem Planflansch Reaktionsgefäßmit angeschlossener Kolonne, Ankerrührer und Innenthermometer wurden 370 g n-Butylacetat und 300 g Polyester V8 vorgelegt. Unter Rühren wurde der Polyester bei 105 °C und im Stickstoffstrom vollständig aufgelöst, 60 min gerührt und anschließend mit 1,50 g t-Butyl-per-2-ethylhexanoat versetzt. Diese Lösung wurde über einen Zeitraum von 5 min bei 105 °C gerührt, bevor mittels einer Dosierungspumpe eine Mischung aus 17,75 g Vinylphosphonsäure, 0,39 g Dimethyl 2,2'-azobis-isobutyrat und 185 g n-Butylacetat zügig innerhalb 120 min zudosiert wurde. Die Pumpe wurde mit 185 g n-Butylacetat gespült und 180 min nach Dosierungsende wurde die Polymerlösung abgekühlt.

### Beispiel 6:

In einem Planflansch Reaktionsgefäßmit angeschlossener Kolonne, Ankerrührer und Innenthermometer wurden 110 g n-Butylacetat und 300 g Polyester V6 vorgelegt. Unter Rühren wurde der Polyester bei 75 °C und im Stickstoffstrom vollständig aufgelöst, 60 min gerührt und anschließend mit 1,50 g t-Butyl-per-2-ethylhexanoat versetzt. Diese Lösung wurde über einen Zeitraum von 5 min bei 75 °C gerührt, bevor mittels einer Dosierungspumpe eine Mischung aus 36,46 g Vinyphoshonsäure, 0,41 g Dimethyl 2,2'-azobis-isobutyrat und 55 g n-Butylacetat zügig innerhalb 120 min zudosiert wurde. Die Pumpe wurde mit 55 g n-Butylacetat gespült und 180 min nach Dosierungsende wurde die Polymerlösung abgekühlt.

### Beispiel 7:

In einem Planflansch Reaktionsgefäß mit angeschlossener Kolonne, Ankerrührer und Innenthermometer wurden 105 g n-Butylacetat und 300 g Polyester V8 vorgelegt. Unter Rühren wurde der Polyester bei 75 °C und im Stickstoffstrom vollständig aufgelöst, 60 min gerührt und anschließend mit 0,15 g t-Butyl-per-2-ethylhexanoat versetzt. Diese Lösung wurde über einen Zeitraum von 5 min bei 75 °C gerührt, bevor mittels einer Dosierungspumpe eine Mischung aus 17,75 g Vinylphosphonsäure, 3,13 g Dimethyl 2,2'-azobis-isobutyrat und 52,50 g n-Butylacetat zügig innerhalb 120 min zudosiert wurden. Die Pumpe wurde mit 52,50 g n-Butylacetat gespült und 120 min nach Dosierungsende wurde die Polymerlösung abgekühlt.

### Beispiel 8:

In einem Planflansch Reaktionsgefäß mit angeschlossener Kolonne, Ankerrührer und Innenthermometer wurden 250 g n-Butylacetat und 300 g Polyester V5 vorgelegt. Unter Rühren wurde der Polyester bei 95°C und im Stickstoffstrom vollständig aufgelöst, 60 min gerührt und anschließend mit 0,30 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 1,38 g Dimethyl 2,2'-azobis-isobutyrat und 125 g n-Butylacetat zügig innerhalb 46 min zudosiert wurde. Die Pumpe wurde mit 125 g n-Butylacetat gespült und 120 min nach Dosierungsende wurde die Polymerlösung abgekühlt.

### Beispiel 9:

In einem Planflansch Reaktionsgefäß mit angeschlossener Kolonne, Ankerrührer und Innenthermometer wurden 200 g n-Butylacetat und 300 g Polyester V9 vorgelegt. Unter Rühren wurde der Polyester bei 95°C und im Stickstoffstrom vollständig aufgelöst, 60 min gerührt und anschließend mit 0,30 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 1,38 g Dimethyl 2,2'-azobis-isobutyrat und 100 g n-Butylacetat zügig innerhalb 90 min zudosiert wurden. Die Pumpe wurde mit 100 g n-Butylacetat gespült und 120 min nach Dosierungsende wurde die Polymerlösung abgekühlt.

### Beispiel 10:

In einem Planflansch Reaktionsgefäß mit angeschlossener Kolonne, Ankerrührer und Innenthermometer wurden 200 g n-Butylacetat und 300 g Polyester V9 vorgelegt. Unter Rühren wurde der Polyester bei 95°C und im Stickstoffstrom vollständig aufgelöst, 60 min gerührt und anschließend mit 0,60 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 1,93 g Dimethyl 2,2'-azobis-isobutyrat und 150 g n-Butylacetat zügig innerhalb 90 min zudosiert wurden. Die Pumpe wurde mit 50 g n-Butylacetat gespült und 120 min nach Dosierungsende wurde die Polymerlösung abgekühlt.

### Beispiel 11:

In einem Planflansch Reaktionsgefäß mit angeschlossener Kolonne, Ankerrührer und Innenthermometer wurden 200 g n-Butylacetat und 300 g Polyester V9 vorgelegt. Unter Rühren wurde der Polyester bei 95°C und im Stickstoffstrom vollständig aufgelöst, 60 min gerührt und anschließend mit 0,90 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 2,48 g Dimethyl 2,2'-azobis-isobutyrat und 150 g n-Butylacetat zügig innerhalb 90 min zudosiert wurde. Die Pumpe wurde mit 50 g n-Butylacetat gespült und 120 min nach Dosierungsende wurde die Polymerlösung abgekühlt.

### Beispiel 12:

In einem Planflansch Reaktionsgefäß mit angeschlossener Kolonne, Ankerrührer und Innenthermometer wurden 160 g n-Butylacetat und 300 g Polyester V10 vorgelegt. Unter Rühren wurde der Polyester bei 95°C und im Stickstoffstrom vollständig aufgelöst, 60 min gerührt und anschließend mit 0,90 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 2,48 g Dimethyl 2,2'-azobis-isobutyrat und 120 g n-Butylacetat zügig innerhalb 120 min zudosiert wurden. Die Pumpe wurde mit 40 g n-Butylacetat gespült und 120 min nach Dosierungsende wurde die Polymerlösung abgekühlt.

### Beispiel 13:

In einem Planflansch Reaktionsgefäß mit angeschlossener Kolonne, Ankerrührer und Innenthermometer wurden 200 g n-Butylacetat und 300 g Polyester V10 vorgelegt. Unter Rühren wurde der Polyester bei 95°C und im Stickstoffstrom vollständig aufgelöst, 60 min gerührt und anschließend mit 0,90 g t-Butyl-per-2-ethylhexanoat versetzt. Diese Lösung wurde über einen Zeitraum von 5 min bei 95°C gerührt, bevor mittels einer Dosierungspumpe eine Mischung aus 37,27 g Vinylphosphonsäure, 2,48 g Dimethyl 2,2'-azobis-isobutyrat und 150 g n-Butylacetat zügig innerhalb 30 min zudosiert wurde. Die Pumpe wurde mit 50 g n-Butylacetat gespült und 120 min nach Dosierungsende wurde die Polymerlösung abgekühlt.

### Beispiel 14:

In einem Planflansch Reaktionsgefäß mit angeschlossener Kolonne, Ankerrührer und Innenthermometer wurden 360 g n-Butylacetat und 250 g Polyester V10 vorgelegt. Unter Rühren wurde der Polyester bei 105°C und im Stickstoffstrom vollständig aufgelöst, 60 min gerührt und anschließend mit 0,71 g t-Butyl-per-2-ethylhexanoat versetzt. Diese Lösung wurde über einen Zeitraum von 5 min bei 105°C gerührt, bevor 46,95 g Vinylphosphonsäure zugegeben wurden. Nach 60 min wurden noch 0,24 g t-Butyl-per-2-ethylhexanoat zugegeben. Nach 240 min wurde die Polymerlösung abgekühlt.

### Beispiel 15:

In einem Planflansch Reaktionsgefäß mit angeschlossener Kolonne, Ankerrührer und Innenthermometer wurden 420 g n-Butylacetat und 250 g Polyester V10 vorgelegt. Unter Rühren wurde der Polyester bei 105°C und im Stickstoffstrom vollständig aufgelöst, 60 min gerührt und anschließend mit 1,24 g t-Butyl-per-2-ethylhexanoat versetzt. Diese Lösung wurde über einen Zeitraum von 5 min bei 105°C gerührt, bevor 93,90 g Vinylphosphonsäure zugegeben wurden. Nach 60 min wurden noch 0,41 g t-Butyl-per-2-ethylhexanoat zugegeben. Nach 240 min wurde die Polymerlösung abgekühlt.

### Beispiel 16:

In einem Planflansch Reaktionsgefäß mit angeschlossener Kolonne, Ankerrührer und Innenthermometer wurden 380 g n-Butylacetat und 200 g Polyester V10 vorgelegt. Unter Rühren wurde der Polyester bei 105°C und im Stickstoffstrom vollständig aufgelöst, 60 min gerührt und anschließend mit 1,42 g t-Butyl-per-2-ethylhexanoat versetzt. Diese Lösung wurde über einen Zeitraum von 5 min bei 105°C gerührt, bevor 112,68 g Vinylphosphonsäure zugegeben wurden. Nach 60 min wurden noch 0,47 g t-Butyl-per-2-ethylhexanoat zugegeben. Nach 240 min wurde die Polymerlösung abgekühlt.

In Tabelle 3 sind die Ergebnisse der Pfropfversuche aus den Beispielen 1 bis 16 zusammengefasst.

**Tabelle 3: Ergebnisse der Pfropfversuche**

| Beispiel-Nr. | Pfropfprodukt (Schritt B) | | | | | | | |
|---|---|---|---|---|---|---|---|---|
| | Mn [g/mol] | Mw [g/mol] | Tg [°C] | Tm [°C] | Umsatz Monomer [%] | Umsatz ITA [%] | SZ | OHZ |
| 1 | 5400 | 19900 | -59 | 28 | 9,4 | 5 | n.b. | n.b. |
| 2 | 7000 | 27500 | -60 | 30 | 95 | 64 | n.b. | n.b. |
| 3 | 7600 | 30400 | -57 | 28 | 95 | 72 | n.b. | n.b. |
| 4 | 3400 | 9400 | -62 | 20 | 92 | 46 | n.b. | n.b. |
| 5 | 3700 | 16100 | -61 | 20 | 58 | 57 | n.b. | n.b. |
| 6 | 2500 | 9100 | -60 | 28 | 83 | 38 | n.b. | n.b. |
| 7 | 3500 | 13600 | -61 | 20 | 41 | 35 | n.b. | n.b. |
| 8 | 2300 | 5000 | -50 | n.f. | 87 | 43 | n.b. | n.b. |
| 9 | 2200 | 4600 | -49 | n.f. | 80 | 48 | n.b. | n.b. |
| 10 | 2700 | 6500 | -52 | n.f. | 90 | 63 | n.b. | n.b. |
| 11 | 2700 | 7200 | -53 | n.f. | 91 | 68 | n.b. | n.b. |
| 12 | 2700 | 8400 | -51 | n.f. | 92 | 68 | n.b. | n.b. |
| 13 | 3400 | 10700 | -49 | n.f. | 93 | 61 | n.b. | n.b. |
| 14 | 4200 | 27800 | -43 | n.f. | 38 | 80 | 0,9 | 34,8 |
| 15 | 3300 | 18300 | -39 | n.f. | 49 | 92 | 1,2 | 32,7 |
| 16 | 2900 | 14500 | -37 | n.f. | 56 | 97 | 1,1 | 29,0 |

| | | | | | | | | |
|---|---|---|---|---|---|---|---|---|
| Umsatz ITA = Umsatz Itakonsäure, n.b. = nicht bestimmt, n.f.nicht feststellbar | | | | | | | | |

## Patentansprüche

1. Pfropfcopolymer A(B)ₓ mit x = 1 bis 40, das ein Polymergerüst A und ein oder mehrere, gleiche oder verschiedene Polymerreste B aufweist, **dadurch gekennzeichnet, dass** die Polymerreste B der Formel (I) genügen 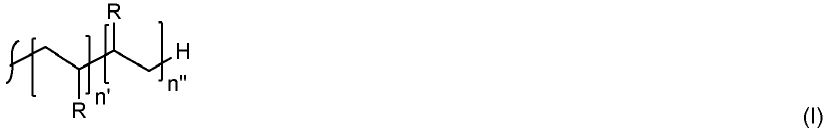 mit n' und n" = gleiche oder verschiedene Zahlen, bevorzugt Zahlen von 0 bis 40, besonders bevorzugt Zahlen von 2 bis 30, mit der Maßgabe, dass n' + n" größer-gleich 1, und R gleiche oder verschiedene Reste, die mindestens ein Element der 5. Hauptgruppe des Periodensystem der Elemente, bevorzugt mindestens ein Element ausgewählt aus Stickstoff oder Phosphor, besonders bevorzugt Phosphor aufweisen, wobei die mit n' und n" indizierten Bausteine blockweise oder statistisch verteilt angeordnet sein können, und der Polymerrest B über einen mit n' oder einen mit n" indizierten Baustein an das Polymergerüst A angebunden sein kann.

2. Pfropfcopolymer A(B)ₓ gemäß Anspruch 1, **dadurch gekennzeichnet, dass** es als Polymergerüst A einen Polyester der Formel (II) aufweist
X[Z]ₘ (II)
mit X = Polyester und m größer-gleich 0, bevorzugt größer-gleich 1, besonders bevorzugt größer-gleich 2, ganz besonders bevorzugt 2 und Z= OH und/oder OR', mit R' = Kohlenwasserstoffrest mit 1 bis 8 Kohlenstoffatomen oder Carbonsäurerest mit 1 bis 8 Kohlenstoffatomen.

3. Pfropfcopolymer A(B)ₓ gemäß Anspruch 1 oder 2, **dadurch gekennzeichnet, dass** es x Bausteine gemäß Formel (III) aufweist 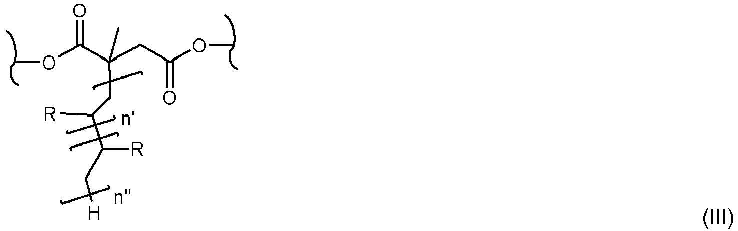 mit R, n' und n" wie für Formel (I) definiert.

4. Pfropfcopolymer A(B)ₓ gemäß mindestens einem der vorangegangenen Ansprüche, **dadurch gekennzeichnet, dass** R ein Rest der Formel (IVa), (IVb), (IVc), (IVd) oder (IVe) 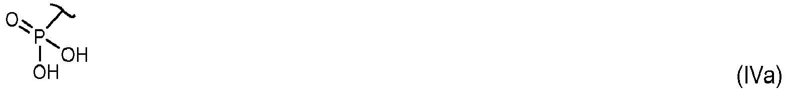 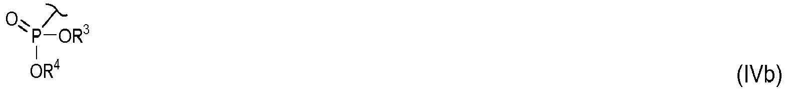 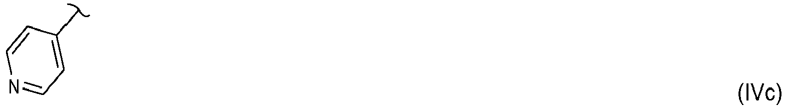 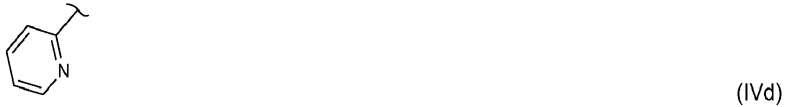 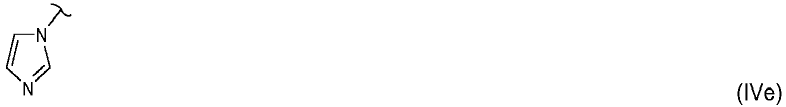 ist.

5. Pfropfcopolymer A(B)ₓ gemäß mindestens einem der vorangegangenen Ansprüche, **dadurch gekennzeichnet, dass** die Bausteine gemäß Formel (III) der Formel (V) genügen 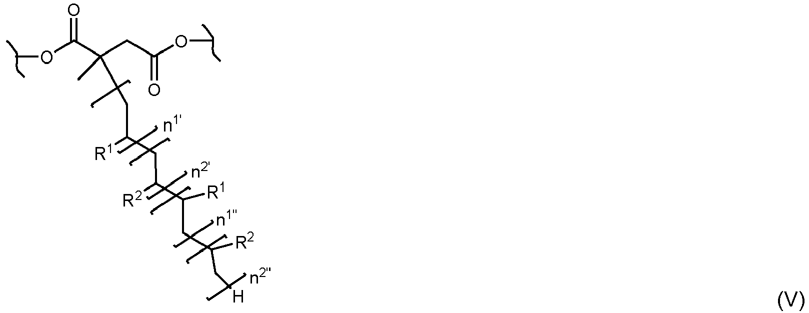 mit R¹ und R² gleich einem Rest der Formel (IVa), (IVb), (IVc), (IVd) oder (IVe) mit der Maßgabe, dass R¹ ungleich R² ist und n^{1'}, n^{1"}, n^{2'} und n^{2"} gleiche oder verschiedene Zahlen, bevorzugt Zahlen von 1 bis 5, mit der Maßgabe, dass n^{1'}+ n^{1"} = n' und n^{2'}+ n^{2"} = n" ist, und die mit n^{1'}, n^{1"}, n^{2'} und n^{2"} indizierten Bausteine blockweise oder statistisch verteilt angeordnet sein können, und der Polymerrest über ein mit n^{1'}, n^{1"}, n^{2'} oder n^{2"} indizierten Baustein an das Polymergerüst angebunden sein kann.

6. Pfropfcopolymer A(B)ₓ gemäß mindestens einem der vorangegangenen Ansprüche, **dadurch gekennzeichnet, dass** sie ein gewichtsmittleres Molekulargewicht von 1000 bis 60000 g/mol, bevorzugt von 3000 bis 50000 g/mol, aufweisen und besonders bevorzugt von 4000 bis 40000 g/mol auf.

7. Pfropfcopolymer A(B)ₓ gemäß mindestens einem der vorangegangenen Ansprüche, **dadurch gekennzeichnet, dass** es erhalten wurde nach einem Verfahren gemäß einem der Ansprüche 8 bis 14.

8. Verfahren zur Herstellung von Pfropfcopolymeren umfassend die Verfahrensschritte
a) Polymerisation einer oder mehrerer aliphatischer oder aromatischer Carbonsäuren mit mindestens einer, bevorzugt zwei bis 10, besonders bevorzugt 2 bis 4 und ganz besonders bevorzugt zwei Carbonsäuregruppen, oder deren veresterbare Derivate, Itakonsäure oder deren veresterbare Derivate, und eines oder mehrerer aliphatischer oder aromatischer Alkohole, mit mindestens zwei, bevorzugt zwei bis 10, besonders bevorzugt 2 bis 4 und ganz besonders bevorzugt zwei Hydroxylgruppen, zu einem Polyester, der mindestens eine Vinyl-Gruppe aufweist, und
b) Polymerisation des Polyesters, der mindestens eine Vinyl-Gruppe aufweist, mit mindestens einem eine Vinyl-Gruppe aufweisenden Monomeren, bevorzugt mindestens einem eine Vinyl-Gruppe aufweisenden Monomeren, das ein Element der 5. Hauptgruppe des Periodensystems der Elemente, bevorzugt Stickstoff oder Phosphor, besonders bevorzugt Phosphor aufweist, bevorzugt durchgeführt als radikalische Lösungspolymerisation.

9. Verfahren nach Anspruch 8, **dadurch gekennzeichnet, dass** der Verfahrensschritt a) als Polykondensationsreaktion, bevorzugt als Schmelze-Polykondensation, in Vakuumfahrweise oder mittels Stickstoff-Strippen durchgeführt wird.

10. Verfahren nach Anspruch 8 oder 9, **dadurch gekennzeichnet, dass** in Verfahrensschritt a) 0,1 bis 20 mol-%, bevorzugt 1 bis 15 mol-% und besonders bevorzugt 2 bis 12 mol-% bezogen auf die Gesamtmenge aller eingesetzten Carbonsäuren an Itakonsäure oder deren veresterbare Derivate, vorzugsweise Itakonsäure, eingesetzt wird.

11. Verfahren nach einem der Ansprüche 8 bis 10, **dadurch gekennzeichnet, dass** die Polymerisation in Verfahrensschritt a) so lange durchgeführt wird, bis der erhaltene Polyester, der Vinyl-Gruppen aufweist, ein gewichtsmittleres Molekulargewicht Mw von 5000 bis 25000 g/mol, bevorzugt 7000 bis 20000 g/mol aufweist.

12. Verfahren nach einem der Ansprüche 8 bis 11, **dadurch gekennzeichnet, dass** in Verfahrensschritt a) als aliphatische oder aromatische Carbonsäure mit mindestens zwei Carbonsäuregruppen Bernsteinsäure, Glutarsäure, Adipinsäure, Azelainsäure, Sebacinsäure, Dodecandisäure, Tetradecandisäure, Octadecandisäure, Isomere der Cyclohexandicarbonsäure oder Isomere der Benzoldicarbonsäure oder Trimellitsäure oder deren veresterbare Derivate und als aliphatischer oder aromatischer Alkohol mit mindestens zwei Hydroxylgruppen Ethylenglykol, Propandiol-1,2, Propandiol-1,3, Butandiol-1,4, Pentandiol-1,5, Hexandiol-1,6, Nonandiol-1,9, Dodecandiol-1,12, Neopentyl-glykol, Butylethylpropandiol-1,3, Methylpropandiol-1,3, Methylpentandiole, Cyclo-hexandimethanole, Trimethylolpropan, Pentaerythrol, Dicidol, 2,2,4-trimethyl-1, 6-hexanediol (TMHD), Glycerin, Pentaerythrit, Umsetzungsprodukte von Hydrochinon, Bisphenol A, Bisphenol F oder Dihydroxynaphthalin mit Epoxiden, oder Etherdiole eingesetzt werden.

13. Verfahren nach einem der Ansprüche 8 bis 12, **dadurch gekennzeichnet, dass** in Verfahrensschritt b) als eine Vinyl-Gruppe aufweisenden Monomeren Vinylphosphonsäure (VPA), Dimethylvinylphosphonat (DMVP), Vinylimidazol, 2-Vinylpyridin (2VP) oder 4-Vinylpyridin (4VP) oder Mischungen von zwei oder mehreren dieser vinylischen Monomere eingesetzt werden.

14. Verfahren nach einem der Ansprüche 8 bis 13, **dadurch gekennzeichnet, dass** in Verfahrensschritt b) so viel an mindestens eine Vinyl-Gruppe aufweisenden Monomeren eingesetzt wird, dass das molare Verhältnis von in Verfahrensschritt a) eingesetzter Itakonsäure zu in Verfahrensschritt b) eingesetzten Vinyl-Gruppe aufweisenden Monomeren von 1 zu 0,5 bis 1 zu 10, bevorzugt von 1 zu 1 bis 1 zu 8 und besonders bevorzugt von 1 : 2 bis 1 : 5 beträgt.

15. Verwendung der Pfropfcopolymeren nach einem der Ansprüche 1 bis 7 oder hergestellt nach einem der Ansprüche 8 bis 14 als Haftvermittler, als Flammschutzmittel in Klebstoff, bevorzugt in reaktivem Heißschmelzklebstoff, oder als Viskositätsmodifizierer oder Viskositätsindexmodifizierer, bevorzugt in Ölen, besonders bevorzugt in Motorenölen, Getriebeölen oder Hydraulikölen.
